# EUROPÄISCHE PATENTSCHRIFT

(11) **EP 3 093 176 B1**
(45) Veröffentlichungstag und Bekanntmachung des Hinweises auf die Patenterteilung: **13.11.2019**
(21) Anmeldenummer: 16000965.0
(22) Anmeldetag: 28.04.2016
(51) Int. Cl.: B60K 15/035, B60K 15/03, F16K 27/12, F16K 31/06

(54) **MAGNETVENTILEINRICHTUNG FÜR EIN KRAFTFAHRZEUG**
MAGNETIC VALVE ASSEMBLY FOR A MOTOR VEHICLE
DISPOSITIF D'ELECTROVANNE POUR UN VEHICULE AUTOMOBILE

(30) Priorität: 05.05.2015 DE 102015005754
(43) Veröffentlichungstag der Anmeldung: 16.11.2016
(73) Patentinhaber: AUDI AG, 85045 Ingolstadt (DE)
(72) Erfinder: Hagen, Harald, 95473 Creussen (DE)

(56) Entgegenhaltungen:
- DE-A1-102009 041 853
- DE-A1-102010 044 336
- US-A- 6 095 188
- US-A1- 2006 278 838

## Beschreibung

Die Erfindung betrifft eine Magnetventileinrichtung für ein Kraftfahrzeug, mit einem Magnetventil und einer Befestigungseinrichtung zur Befestigung des Magnetventils an einer Kraftfahrzeugkarosserie des Kraftfahrzeugs.

Die Magnetventileinrichtung weist das Magnetventil und die Befestigungseinrichtung auf. Das Magnetventil ist mithilfe der Befestigungseinrichtung an der Kraftfahrzeugkarosserie befestigt. Beispielsweise ist das Magnetventil mitsamt der Befestigungseinrichtung in einem Motorraum des Kraftfahrzeugs angeordnet. Bevorzugt ist das Magnetventil als Entlüftungsmagnetventil ausgestaltet, mittels welchem ein Betriebsmitteltank des Kraftfahrzeugs entlüftet werden kann. Zu diesem Zweck ist das Magnetventil beispielsweise einerseits an einen Betriebsmitteltank angeschlossen, während es andererseits mit einer Außenumgebung des Kraftfahrzeugs in Fluidverbindung steht, beispielsweise über eine Filtereinrichtung, insbesondere eine Aktivkohlefiltereinrichtung. Mithilfe des Magnetventils ist nun eine Fluidverbindung zwischen dem Betriebsmitteltank und der Außenumgebung beziehungsweise der Filtereinrichtung unterbrechbar sowie herstellbar. In einem ersten Betriebszustand des Magnetventils liegt insoweit die Fluidverbindung vor, während sie in einem zweiten Betriebszustand unterbrochen ist. Die Magnetventileinrichtung kann insoweit Bestandteil einer Betriebsmitteltankeinrichtung des Kraftfahrzeugs sein.

Die US 6 095 188 A zeigt eine Magnetventileinrichtung mit einem Magnetventil und einer Befestigungseinrichtung. Eine weitere Magnetventileinrichtung, die für ein Kraftfahrzeug vorgesehen ist, ist aus der DE 10 2009 041 853 A1 bekannt.

Es ist nun Aufgabe der Erfindung, eine Magnetventileinrichtung für ein Kraftfahrzeug vorzuschlagen, welche gegenüber bekannten Magnetventileinrichtungen Vorteile aufweist, insbesondere einen geräuscharmen Betrieb bei gleichzeitig geringem Bauraumbedarf ermöglicht. Dies wird erfindungsgemäß mit einer Magnetventileinrichtung mit den Merkmalen des Anspruchs 1 erreicht. Dabei ist vorgesehen, dass die Befestigungseinrichtung ein Trägerelement, an dem das Magnetventil befestigt ist, sowie von dem Trägerelement ausgehende Haltearme aufweist, über welche das Trägerelement an der Kraftfahrzeugkarosserie befestigbar ist, wobei die Haltearme das Magnetventil wenigstens bereichsweise zwischen sich aufnehmen und in Zugrichtung eines Elektromagnets des Magnetventils elastisch sind. Das Trägerelement liegt erfindungsgemäß in Form einer Trägerplatte vor, an welcher das Magnetventil angeordnet und befestigt ist. Von dem Trägerelement gehen mehrere Haltearme aus, welche sich in Richtung der Kraftfahrzeugkarosserie erstrecken. Mittels der Haltearme ist das Trägerelement an der Kraftfahrzeugkarosserie befestigt beziehungsweise befestigbar.

Vorzugsweise ist das Magnetventil bei an der Kraftfahrzeugkarosserie befestigtem Trägerelement von der Kraftfahrzeugkarosserie beabstandet angeordnet, sodass eine vollständige Entkopplung des Magnetventils von der Kraftfahrzeugkarosserie erzielt wird. Die Haltearme weisen dazu entsprechende Abmessungen auf. Das Magnetventil ist insoweit lediglich mittelbar, nämlich über die Befestigungseinrichtung, insbesondere über das Trägerelement und die Haltearme, mit der Kraftfahrzeugkarosserie verbunden beziehungsweise an dieser befestigt. Bei der Erfindung liegen die Haltearme beabstandet von dem Magnetventil vor, berühren dieses also nicht. Die Haltearme stehen also erfindungsgemäß lediglich mittelbar, nämlich über das Trägerelement, mit dem Magnetventil in Verbindung. Anders ausgedrückt steht das Magnetventil nur über das Trägerelement in Verbindung mit den Haltearmen, während eine Verbindung zwischen dem Magnetventil und der Kraftfahrzeugkarosserie lediglich über das Trägerelement sowie die Haltearme vorliegt.

Die Haltearme sind erfindungsgemäß derart ausgestaltet, dass sie das Magnetventil wenigstens bereichsweise zwischen sich aufnehmen. Das bedeutet, dass zwei der Haltearme auf gegenüberliegenden Seiten des Magnetventils vorgesehen sind. Mit einer derartigen Ausgestaltung der Befestigungseinrichtung wird zum einen ein sicherer Halt des Magnetventils bezüglich der Kraftfahrzeugkarosserie erzielt, jedoch zugleich die bereits erwähnte vollständige Entkopplung des Magnetventils von der Kraftfahrzeugkarosserie erreicht.

Das Magnetventil weist den Elektromagnet sowie eine mit dem Elektromagnet wirkverbundene Ventileinrichtung auf. Die Ventileinrichtung kann beispielsweise die vorstehend bereits erwähnten Betriebszustände einnehmen, insbesondere den ersten Betriebszustand und den zweiten Betriebszustand. Dabei ist die Ventileinrichtung mittels des Elektromagnets ansteuerbar. Der Elektromagnet weist einen Anker auf, welcher in Zugrichtung beziehungsweise entgegen der Zugrichtung verlagerbar ist. Die Zugrichtung entspricht beispielsweise einer Längsmittelachse des Ankers oder liegt parallel zu dieser. Der Anker ist mit der Ventileinrichtung wirkverbunden. Bei einer Betätigung des Elektromagnets entstehen Impulse beziehungsweise Schwingungen, welche unerwünschte Geräusche hervorrufen können, sofern sie nicht ausreichend gedämpft beziehungsweise unterbunden werden. Dies ist insbesondere der Fall, wenn das Magnetventil als direktgesteuertes Magnetventil ausgestaltet ist, also nicht vorgesteuert ist. Das Magnetventil ist bevorzugt als ein solches direktgesteuertes Ventil ausgestaltet. Selbstverständlich kann es jedoch alternativ auch als vorgesteuertes Ventil oder zwangsgesteuertes Ventil vorliegen.

Um die bei einem Betrieb des Magnetventils entstehenden Impulse beziehungsweise Schwingungen ausreichend zu dämpfen und eine Körperschallübertragung auf die Kraftfahrzeugkarosserie zu unterbinden, sind die Haltearme erfindungsgemäß in Zugrichtung des Elektromagnets elastisch ausgestaltet.

Das bedeutet beispielsweise, dass die Haltearme in Zugrichtung geringere Abmessungen aufweisen als in einer auf der Zugrichtung senkrecht stehenden zweiten Richtung sowie einer auf der Zugrichtung sowie der zweiten Richtung senkrecht stehenden dritten Richtung.

Um eine möglichst kostengünstige Herstellung der Befestigungseinrichtung zu ermöglichen, sind die Haltearme erfindungsgemäß einstückig und materialeinheitlich mit dem Trägerelement ausgestaltet. Beispielsweise werden sie gemeinsam mit dem Trägerelement während eines Spritzgießvorgangs hergestellt oder sind an das Trägerelement angespritzt. Bei der erfindungsgemäß materialeinheitlichen Ausgestaltung von Trägerelement und Haltearmen ist die zur Bereitstellung der Dämpfung notwendige Elastizität der Haltearme durch eine ausreichend geringe Stärke der Haltearme realisiert.

In einer bevorzugten Ausgestaltung der Erfindung ist vorgesehen, dass an den Haltearmen jeweils ein Befestigungsflansch vorliegt, der eine plane Anlagefläche zur Anlage an einer Gegenfläche der Kraftfahrzeugkarosserie aufweist. Der Befestigungsflansch ist vorzugsweise gegenüber dem jeweiligen Haltearm angewinkelt. Beispielsweise steht der Befestigungsflansch beziehungsweise seine plane Anlagefläche senkrecht auf dem jeweiligen Haltearm. Bei einer Montage der Magnetventileinrichtung wird die Anlagefläche an die Gegenfläche der Kraftfahrzeugkarosserie angelegt und dort befestigt. Zu diesem Zweck durchgreift beispielsweise eine Befestigungsausnehmung die Anlagefläche, durch welche eine Schraube in die Kraftfahrzeugkarosserie eingebracht werden kann. Nachfolgend liegt ein Kopf der Schraube auf der der Kraftfahrzeugkarosserie abgewandten Seite des Befestigungsflanschs an und drängt diesen in Richtung der Kraftfahrzeugkarosserie beziehungsweise an die Kraftfahrzeugkarosserie. Die Befestigungsausnehmung kann beispielsweise im Querschnitt kreisrund oder langlochförmig sein. Der Befestigungsflansch ist vorzugsweise einstückig und/oder materialeinheitlich mit dem jeweiligen Haltearm ausgestaltet.

Eine bevorzugte Ausgestaltung der Erfindung sieht vor, dass an dem Befestigungsflansch zur Anlage an der Gegenfläche ein Dämpfungselement vorgesehen ist. Mithilfe des Dämpfungselements kann die Dämpfungswirkung der Befestigungseinrichtung weiter verbessert werden. Das Dämpfungselement besteht vorzugsweise aus einem weicheren Material als die Haltearme beziehungsweise der Befestigungsflansch. Die Anlagefläche des Befestigungsflanschs wird insoweit von dem Dämpfungselement bereitgestellt. Das Dämpfungselement ist dabei Bestandteil des jeweiligen Befestigungsflanschs. Das Dämpfungselement wird beispielsweise separat von dem Befestigungsflansch ausgebildet und erst bei der Montage der Magnetventileinrichtung dem Befestigungsflansch zugeordnet. Alternativ kann selbstverständlich das Dämpfungselement einstückig mit dem Befestigungsflansch ausgebildet werden, beispielsweise an diesen angespritzt werden. Zu diesem Zweck kommt vorzugsweise das vorstehend bereits erwähnte Zweikomponenten-Spritzgießverfahren zum Einsatz.

Eine Weiterbildung der Erfindung sieht vor, dass die Haltearme sich in eine Richtung erstrecken, die gegenüber der Zugrichtung angewinkelt ist. Das bedeutet, dass die Haltearme in dieser Richtung ihre größten Abmessungen aufweisen, sodass insoweit eine Längsmittelachse jedes Haltearms gegenüber der Zugrichtung angewinkelt ist, mit dieser also einen Winkel einschließt, welcher größer als 0° und kleiner als180° ist. Der Winkel beträgt beispielsweise 45° bis 135°, 60° bis 120°, 70° bis 110°, 75° bis 105°, 80° bis 100°, 85° bis 95°, oder genau 90°. Dabei weisen die Haltearme wie bereits vorstehend erläutert in Zugrichtung Abmessungen auf, welche kleiner sind als die Abmessungen in Richtung der Längsmittelachse des jeweiligen Haltearms.

Zusätzlich oder alternativ kann vorgesehen sein, dass die plane Anlagefläche parallel zu der Zugrichtung verläuft oder mit ihr einen Winkel von größer als 0° und höchstens 5°, höchstens 10°, höchstens 15°, höchstens 20°, höchstens 25°, höchstens 30°, höchstens 35°, höchstens 40° oder höchstens 45° einschließt. Besonders bevorzugt ist die parallele Anordnung der Anlagefläche zu der Zugrichtung, weil mit einer solchen die größte Dämpfungswirkung erzielt werden kann. Alternativ kann jedoch die Anlagefläche gegenüber der Zugrichtung angewinkelt sein, also mit ihr einen Winkel von größer als 0° und kleiner als 180° einschließen. Bevorzugt entspricht der Winkel jedoch höchstens einem der genannten Werte.

In einer weiteren vorteilhaften Ausgestaltung der Erfindung ist vorgesehen, dass das Magnetventil wenigstens bereichsweise zwischen dem Trägerelement und einem an dem Trägerelement befestigten Deckel aufgenommen ist, insbesondere zwischen dem Trägerelement und dem Deckel klemmend gehalten ist. Das an dem Trägerelement angeordnete beziehungsweise befestigte Magnetventil wird insoweit auf seiner von dem Trägerelement abgewandten Seite wenigstens bereichsweise von dem Deckel übergriffen. Bei an der Kraftfahrzeugkarosserie montierter Magnetventileinrichtung liegt insoweit der Deckel zumindest bereichsweise zwischen dem Magnetventil und der Kraftfahrzeugkarosserie vor. Es kann vorgesehen sein, dass das Magnetventil zwar unmittelbar an dem Trägerelement anliegt, jedoch von dem Deckel beabstandet angeordnet ist. Bevorzugt liegt das Magnetventil jedoch sowohl an dem Trägerelement als auch an dem Deckel an, sodass es klemmend zwischen diesen gehalten ist.

Eine bevorzugte Ausgestaltung der Erfindung sieht vor, dass der Deckel eine Aussparung für den Elektromagnet aufweist. Der Elektromagnet erwärmt sich während seines Betriebs, sodass eine ausreichende Kühlung notwendig ist, um einen zuverlässigen und dauerhaften Betrieb sicherzustellen. Aus diesem Grund ist der Deckel derart ausgestaltet, dass er den Elektromagnet nicht oder lediglich teilweise abdeckt. Zu diesem Zweck verfügt er über die Aussparung, durch welche die Magnetventileinrichtung, insbesondere der Elektromagnet, hindurchragt. Während also beispielsweise die Ventileinrichtung des Magnetventils unterhalb des Deckels angeordnet ist, insbesondere vollständig unterhalb des Deckels, wird der Elektromagnet lediglich teilweise oder überhaupt nicht von dem Deckel abgedeckt, sodass eine ausreichende Kühlung gewährleistet ist.

In einer weiteren bevorzugten Ausführungsform der Erfindung ist vorgesehen, dass der Deckel rastend in wenigstens eine Rastausnehmung des Trägerelements eingreift. Beispielsweise weist der Deckel einen Rastvorsprung auf, welcher in die Rastausnehmung eingreift. Dort wirkt der Rastvorsprung mit einer Begrenzung der Rastausnehmung zusammen, wobei der die Begrenzung insoweit als Rastgegenelement dient. Der Deckel kann also bei der Montage der Magnetventileinrichtung auf das Trägerelement aufgesteckt und rastend mit diesem verbunden werden. Dies ermöglicht eine einfache und äußerst schnelle Montage.

Eine weitere Ausgestaltung der Erfindung sieht vor, dass mehrere Rastausnehmungen vorgesehen sind, die gegeneinander versetzte Längsmittelachsen aufweisen. Die Längsmittelachse jeder Rastausnehmung liegt in Richtung ihrer größten Abmessungen, welche als Längsrichtung bezeichnet werden kann, vor. Um ein Verkippen des Deckels bezüglich des Trägerelements zuverlässig zu verhindern, sind nun mehrere Rastausnehmung in dem Trägerelement ausgebildet, deren Längsmittelachsen zudem gegeneinander versetzt sind. Besonders bevorzugt sind die Längsmittelachsen parallel beabstandet zueinander angeordnet. Selbstverständlich kann es auch vorgesehen sein, dass wenigstens zwei der Längsmittelachsen gegeneinander angewinkelt sind, also miteinander einen Winkel von größer als 0° und kleiner als 180° einschließen.

In einer weiteren bevorzugten Ausführungsform der Erfindung ist vorgesehen, dass das Magnetventil wenigstens bereichsweise in einem Schaumstoffelement eingebettet ist. Das Schaumstoffelement umgreift insoweit das Magnetventil wenigstens bereichsweise, vorzugsweise vollständig. In letzterem Fall ragt beispielsweise der Elektromagnet aus dem Schaumstoffelement heraus. Dieser ist also nicht in dem Schaumstoffelement aufgenommen. Das Schaumstoffelement dient der weiteren Verbesserung der Dämpfungswirkung. Vorzugsweise liegt das Schaumstoffelement zwischen dem Magnetventil und dem Trägerelement vor. Zusätzlich oder alternativ kann das Schaumstoffelement zwischen dem Magnetventil und dem Deckel vorliegen. Besonders bevorzugt ist das Magnetventil derart in das Schaumstoffelement eingebettet, dass das Magnetventil lediglich über das Schaumstoffelement mit dem Trägerelement sowie dem Deckel in Verbindung steht. Beispielsweise wird das Schaumstoffelement bei der Montage des Deckels an dem Trägerelement komprimiert, also von dem Deckel in Richtung des Trägerelements beziehungsweise umgekehrt gedrängt. Das Magnetventil wird insoweit mittels des Schaumstoffelements bezüglich des Trägerelements sowie des Deckels befestigt und dabei von diesen weitgehend entkoppelt.

Schließlich kann in einer weiteren Ausführungsform der Erfindung vorgesehen sein, dass das Schaumstoffelement einerseits an dem Trägerelement und andererseits an dem Deckel anliegt. Auf eine derartige Ausführungsform wurde vorstehend bereits eingegangen. Das Magnetventil ist dabei mitsamt dem Schaumstoffelement klemmend zwischen dem Trägerelement und dem Deckel gehalten.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine erste Darstellung einer Magnetventileinrichtung, welche ein Magnetventil und eine Befestigungseinrichtung aufweist,
- Figur 2: eine Seitenansicht der Magnetventileinrichtung, und
- Figur 3: eine Detaildarstellung eines Trägerelements der Befestigungseinrichtung.

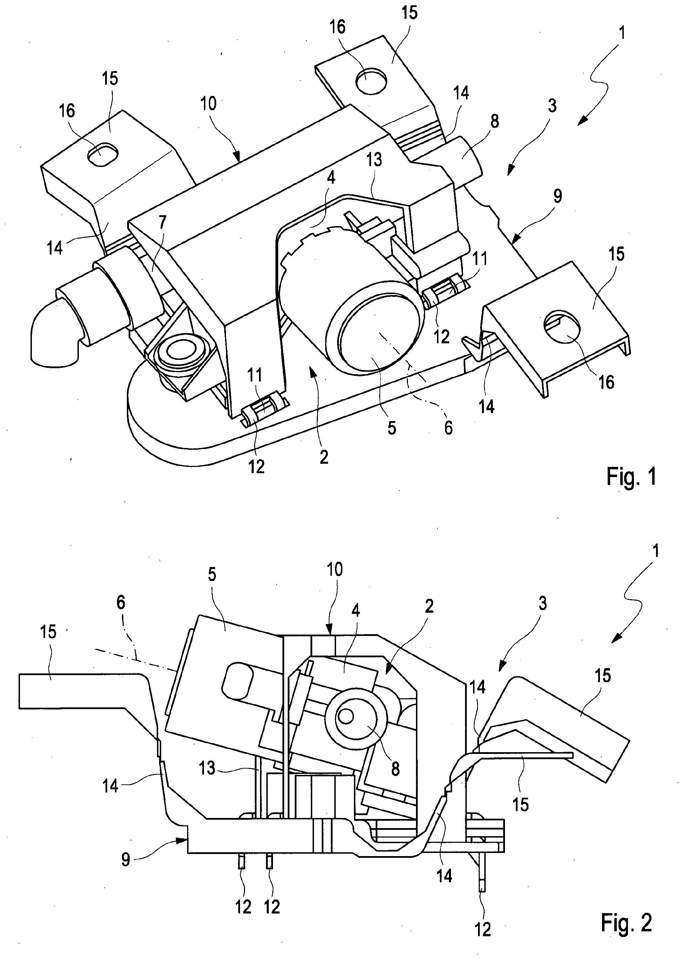

Die Figur 1 zeigt eine erste Ansicht einer Magnetventileinrichtung 1, die ein Magnetventil 2 sowie eine Befestigungseinrichtung 3 aufweist. Das Magnetventil 2 verfügt über eine Ventileinrichtung 4 sowie einen Elektromagnet 5. Letzterer ist mit der Ventileinrichtung 4 wirkverbunden, sodass mittels des Elektromagnets 5 die Ventileinrichtung 4 in unterschiedliche Zustände beziehungsweise Schaltzustände gebracht werden kann. Zu diesem Zweck verfügt der Elektromagnet 5 vorzugsweise über einen verlagerbaren, hier nicht dargestellten Anker. Dieser ist in einer hier durch eine Längsmittelachse 6 des Elektromagnets 5 angedeutete Zugrichtung sowie in die entgegengesetzte Richtung verlagerbar.

Die Ventileinrichtung 4 verfügt über einen ersten Fluidanschluss 7 sowie einen zweiten Fluidanschluss 8. An den ersten Fluidanschluss 7 ist beispielsweise ein Betriebsmitteltank eines Kraftfahrzeugs angeschlossen, während der zweite Fluidanschluss 8 mit einer Außenumgebung des Kraftfahrzeugs in Strömungsverbindung steht, vorzugsweise über eine Filtereinrichtung, beispielsweise über eine Aktivkohlefiltereinrichtung. In einem ersten Zustand der Ventileinrichtung 4 ist nun die Strömungsverbindung zwischen dem Betriebsmitteltank und der Außenumgebung unterbrochen, während sie in einem zweiten Zustand vorliegt.

Das Magnetventil 2 ist beispielsweise in einem Motorraum des Kraftfahrzeugs angeordnet. Dort wird es an einer Kraftfahrzeugkarosserie des Kraftfahrzeugs befestigt. Zu diesem Zweck ist die Befestigungseinrichtung 3 vorgesehen. Diese weist ein Trägerelement 9 auf, welche hier in Form einer Trägerplatte vorliegt, also eine im Wesentlichen plane Oberfläche besitzt. Weiterhin verfügt die Befestigungseinrichtung 3 über einen Deckel 10, der mit dem Trägerelement 9 verbunden ist. Beispielsweise weist das Trägerelement 9 zu diesem Zweck Rastausnehmungen 11 auf, in welche Rastvorsprünge 12 des Deckels 10 eingreifen.

Der Deckel 10 ist derart ausgestaltet, dass das Magnetventil 2 wenigstens bereichsweise zwischen dem Trägerelement 9 und dem Deckel 10 angeordnet ist, insoweit also das an dem Trägerelement 9 angeordnete Magnetventil 2 wenigstens bereichsweise von dem Deckel 10 übergriffen ist. Um eine ausreichende Kühlung des Elektromagnets 5 sicherzustellen, weist der Deckel 10 eine Aussparung 13 auf. Durch diese ragt wenigstens ein Teil des Elektromagnets 5 heraus. Es kann nun vorgesehen sein, dass das Magnetventil 2, insbesondere die Ventileinrichtung 4, klemmend zwischen dem Trägerelement 9 und dem Deckel 10 gehalten ist. Besonders bevorzugt ist das Magnetventil 2 zumindest bereichsweise in ein Schaumstoffelement (hier nicht dargestellt) eingebettet. In diesem Fall steht das Magnetventil 2 vorzugsweise lediglich über das Schaumstoffelement in Verbindung mit dem Trägerelement 9 und dem Deckel 10.

Es ist vorgesehen, dass von dem Trägerelement 9 Haltearme 14 ausgehen. Über diese ist das Trägerelement 9 an der Fahrzeugkarosserie befestigbar. Die Haltearme 14 sind derart angeordnet, dass sie das Magnetventil 2 wenigstens bereichsweise zwischen sich aufnehmen. Sie erstrecken sich insoweit ausgehend von dem Trägerelement 9 in dieselbe Richtung wie das Magnetventil 2. An jedem Haltearm 14 liegt ein Befestigungsflansch 15 vor, welcher vorzugsweise eine Befestigungsausnehmung 16 aufweist. Diese dient beispielsweise der Aufnahme einer Schraube, mittels welcher der jeweilige Befestigungsflansch an der Kraftfahrzeugkarosserie befestigt ist. Mithilfe einer derart ausgestalteten Befestigungseinrichtung 3 wird eine weitgehende Dämpfung von von dem Magnetventil 2 ausgehenden Impulsen beziehungsweise Schwingungen realisiert. Insoweit wird wenig oder gar kein Körperschall von dem Magnetventil 2 auf die Fahrzeugkarosserie übertragen. Die Haltearme 14 sind zu diesem Zweck zumindest in Zugrichtung des Elektromagnets 5 elastisch ausgestaltet.

Die Figur 2 zeigt eine Seitenansicht der Magnetventileinrichtung 1. Hier wird insbesondere deutlich, dass die Haltearme 14 unterschiedliche Längserstreckungen aufweisen können. Zudem können die Befestigungsflansche 15 unter unterschiedlichen Winkeln zu dem Trägerelement 9 beziehungsweise dem jeweiligen Haltearm 14 vorliegen. Auch wird deutlich, dass wenigstens einer der Halterarme 14, vorzugsweise alle Haltearme 14, ausgehend von dem Trägerelement 9 geringere Abmessungen aufweisen als das Magnetventil 2. Das bedeutet, dass das Magnetventil 2 in die von dem Trägerelement 9 abgewandte Richtung über die Haltearme 14 beziehungsweise die entsprechenden Befestigungsflansche 15 übersteht.

Eine derartige Ausführungsform der Befestigungseinrichtung 3 dient beispielsweise der Befestigung des Magnetventils 2 an einer Kraftfahrzeugkarosserie, welche eine Aufnahmeöffnung für das Magnetventil 2 aufweist. Bei einer solchen Konfiguration ragen also das Magnetventil 2 sowie der Deckel 10 wenigstens bereichsweise in diese Aufnahmeöffnung hinein. Selbstverständlich kann auch eine alternative Ausführungsform vorgesehen sein, bei welcher die Haltearme 14 in die von dem Trägerelement 9 abgewandte Richtung größere Abmessungen aufweisen als das Magnetventil 2, sodass die Haltearme 14 über dieses überstehen.

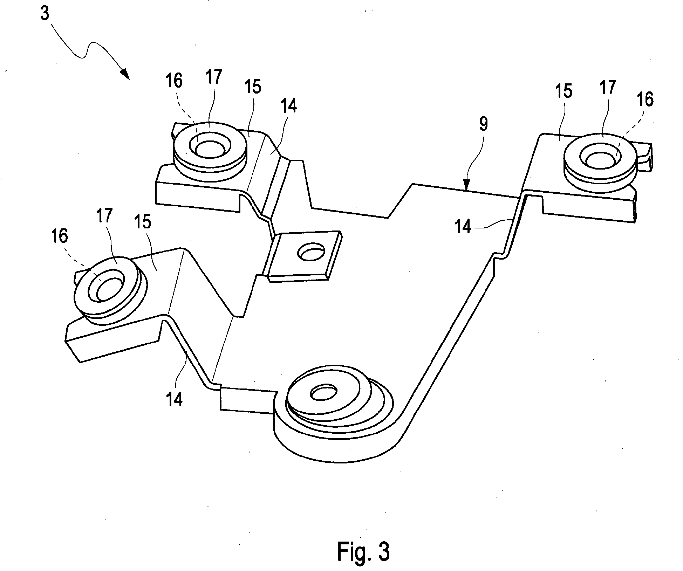

Die Figur 3 zeigt schließlich eine Detaildarstellung der Befestigungseinrichtung 3, wobei das Trägerelement 9 mit den Haltearmen 14 sowie den Befestigungsflanschen 15 dargestellt ist. Bei der hier gezeigten Ausführungsform weist jeder der Befestigungsflansche 15 ein Dämpfungselement 17 auf, über welches es an der Kraftfahrzeugkarosserie anliegen kann. Das Dämpfungselement 17 ist beispielsweise in die entsprechende Befestigungsausnehmung 16 eingesteckt. Das Dämpfungselement 17 besteht bevorzugt aus einem weicheren Material als die Haltearme 14 beziehungsweise die Befestigungsflansche 15. Mithilfe des Dämpfungselements 17 kann die Dämpfungswirkung der Befestigungseinrichtung 3 weiter erhöht werden.

## Patentansprüche

1. Magnetventileinrichtung (1) für ein Kraftfahrzeug, mit einem Magnetventil (2) und einer Befestigungseinrichtung (3) zur Befestigung des Magnetventils (2) an einer Kraftfahrzeugkarosserie des Kraftfahrzeugs, wobei die Befestigungseinrichtung (3) ein als Trägerplatte ausgestaltetes Trägerelement (9), an dem das Magnetventil (2) befestigt ist, sowie von dem Trägerelement (9) ausgehende Haltearme (14) aufweist, über welche das Trägerelement (9) an der Kraftfahrzeugkarosserie befestigbar ist, wobei die Haltearme (14) das Magnetventil (2) wenigstens bereichsweise zwischen sich aufnehmen, lediglich mittelbar über das Trägerelement (9) mit dem Magnetventil (2) in Verbindung stehen sowie einstückig und materialeinheitlich mit dem Trägerelement (9) ausgestaltet sind, **dadurch gekennzeichnet, dass** die Haltearme (14) in Zugrichtung eines Elektromagnets (5) des Magnetventils (2) elastisch sind, wobei die Elastizität der Haltearme (14) durch eine ausreichend geringe Stärke der Haltearme realisiert ist.

2. Magnetventileinrichtung nach Anspruch 1, **dadurch gekennzeichnet, dass** an den Haltearmen (14) jeweils ein Befestigungsflansch (15) vorliegt, der eine plane Anlagefläche zur Anlage an einer Gegenfläche der Kraftfahrzeugkarosserie aufweist.

3. Magnetventileinrichtung nach Anspruch 2, **dadurch gekennzeichnet, dass** an dem Befestigungsflansch (15) zur Anlage an der Gegenfläche ein Dämpfungselement (17) vorgesehen ist.

4. Magnetventileinrichtung nach einem der vorhergehenden Ansprüche, **dadurch gekennzeichnet, dass** die Haltearme (14) sich in eine Richtung erstrecken, die gegenüber der Zugrichtung angewinkelt ist.

5. Magnetventileinrichtung nach einem der vorhergehenden Ansprüche, **dadurch gekennzeichnet, dass** das Magnetventil (2) wenigstens bereichsweise zwischen dem Trägerelement (9) und einem an dem Trägerelement befestigten Deckel (10) aufgenommen ist, insbesondere zwischen dem Trägerelement (9) und dem Deckel (10) klemmend gehalten ist.

6. Magnetventileinrichtung nach Anspruch 5, **dadurch gekennzeichnet, dass** der Deckel (10) eine Aussparung (13) für den Elektromagnet (5) aufweist.

7. Magnetventileinrichtung nach Anspruch 5 oder 6, **dadurch gekennzeichnet, dass** der Deckel (10) rastend in wenigstens eine Rastausnehmung (11) des Trägerelements eingreift.

8. Magnetventileinrichtung nach Anspruch 7, **dadurch gekennzeichnet, dass** mehrere Rastausnehmungen (11) vorgesehen sind, die gegeneinander versetzte Längsmittelachsen aufweisen.

9. Magnetventileinrichtung nach einem der vorhergehenden Ansprüche, **dadurch gekennzeichnet, dass** das Magnetventil (2) wenigstens bereichsweise in einem Schaumstoffelement eingebettet ist.

10. Magnetventileinrichtung nach Anspruch 9, **dadurch gekennzeichnet, dass** das Schaumstoffelement einerseits an dem Trägerelement (9) und andererseits an dem Deckel (10) anliegt.

## Claims

1. Solenoid valve device (1) for a motor vehicle having a solenoid valve (2) and an attachment device (3) for attaching the solenoid valve (2) to a motor vehicle body of the motor vehicle,
wherein the attachment device (3) has a support element (9) designed as a support plate, onto which support element the solenoid valve (2) is attached, as well as holding arms (14) extending from the support element (9), by means of which holding arms the support element (9) can be attached onto the motor vehicle body, wherein the holding arms (14) between them mount the solenoid valve (2) at least in part, are connected only indirectly to the solenoid valve (2) via the support element (9) and are designed in one piece with and made from the same material as the support element (9),
**characterised in that** the holding arms (14) are elastic in the pulling direction of an electromagnet (5) of the solenoid valve (2), wherein the elasticity of the holding arms (14) is provided by a sufficiently low strength of the holding arms.

2. Solenoid valve device according to claim 1, **characterised in that** on the holding arms (14) respectively there is an attachment flange (15) which has a planar bearing surface for bearing against an opposing counter surface of the motor vehicle body.

3. Solenoid valve device according to claim 2, **characterised in that** a damping element (17) is provided on the attachment flange (15) for bearing against the opposing surface.

4. Solenoid valve device according to any of the preceding claims, **characterised in that** the holding arms (14) extend in a direction which is at an angle relative to the pulling direction.

5. Solenoid valve device according to any of the preceding claims, **characterised in that** the solenoid valve (2) is mounted at least in part between the support element (9) and a cover (10) attached to the support element, in particular is clamped between the support element (9) and the cover (10).

6. Solenoid valve device according to claim 5, **characterised in that** the cover (10) has a recess (13) for the electromagnet (5).

7. Solenoid valve device according to claim 5 or 6, **characterised in that** the cover (10) engages in a latching manner in at least one latching recess (11) of the support element.

8. Solenoid valve device according to claim 7, **characterised in that** a plurality of latching recesses (11) are provided which have longitudinal central axes that are offset from each other.

9. Solenoid valve device according to any of the preceding claims, **characterised in that** the solenoid valve (2) is embedded, at least in part, in a foam material element.

10. Solenoid valve device according to claim 9, **characterised in that** the foam material element abuts on the one hand against the support element (9) and on the other hand against the cover (10).

## Revendications

1. Dispositif d'électrovanne (1) pour un véhicule automobile, avec une électrovanne (2) et un dispositif de fixation (3) pour la fixation de l'électrovanne (2) à une carrosserie de véhicule automobile du véhicule automobile,
dans lequel le dispositif de fixation (3) présente un élément porteur (9) conçu comme une plaque porteuse, auquel l'électrovanne (2) est fixée, ainsi que des bras de retenue (14) partant de l'élément porteur (9), par le biais desquels l'élément porteur (9) peut être fixé à la carrosserie de véhicule automobile, dans lequel les bras de retenue (14) reçoivent entre eux l'électrovanne (2) au moins partiellement, sont liés seulement indirectement à l'électrovanne (2) par le biais de l'élément porteur (9) et sont conçus d'un seul tenant et en un même matériau avec l'élément porteur (9),
**caractérisé en ce que** les bras de retenue (14) sont élastiques dans une direction de traction d'un électro-aimant (5) de l'électrovanne (2), dans lequel l'élasticité des bras de retenue (14) est réalisée par une force suffisamment réduite des bras de retenue.

2. Dispositif d'électrovanne selon la revendication 1, **caractérisé en ce qu'**au niveau des bras de retenue (14) se trouve respectivement une bride de fixation (15) qui présente une surface d'appui plane pour l'appui au niveau d'une surface opposée de la carrosserie de véhicule automobile.

3. Dispositif d'électrovanne selon la revendication 2, **caractérisé en ce qu'**au niveau de la bride de fixation (15) est prévu un élément d'amortissement (17) pour l'appui au niveau de la surface opposée.

4. Dispositif d'électrovanne selon l'une quelconque des revendications précédentes, **caractérisé en ce que** les bras de retenue (14) s'étendent dans une direction qui est repliée par rapport à la direction de traction.

5. Dispositif d'électrovanne selon l'une quelconque des revendications précédentes, **caractérisé en ce que** l'électrovanne (2) est reçue au moins partiellement entre l'élément porteur (9) et un couvercle (10) fixé à l'élément porteur, en particulier est maintenu de façon serrée entre l'élément porteur (9) et le couvercle (10).

6. Dispositif d'électrovanne selon la revendication 5, **caractérisé en ce que** le couvercle (10) présente un évidement (13) pour l'électro-aimant (5).

7. Dispositif d'électrovanne selon la revendication 5 ou 6, **caractérisé en ce que** le couvercle (10) est en prise par encliquetage dans au moins un évidement d'encliquetage (11) de l'élément porteur.

8. Dispositif d'électrovanne selon la revendication 7, **caractérisé en ce que** plusieurs évidements d'encliquetage (11) qui présentent des axes médiaux longitudinaux décalés les uns des autres, sont prévus.

9. Dispositif d'électrovanne selon l'une quelconque des revendications précédentes, **caractérisé en ce que** l'électrovanne (2) est englobée au moins partiellement dans un élément en mousse.

10. Dispositif d'électrovanne selon la revendication 9, **caractérisé en ce que** l'élément en mousse est adjacent d'une part à l'élément porteur (9) et d'autre part au couvercle (10).
